# EUROPEAN PATENT SPECIFICATION

(11) **EP 3 114 971 B1**
(45) Date of publication and mention of the grant of the patent: **19.06.2019**
(21) Application number: 15716890.7
(22) Date of filing: 05.03.2015
(51) Int. Cl.: A47J 31/44

(54) **BEVERAGE SUPPORT AND METHOD OF USING SUCH SUPPORT**
GETRÄNKESUPPORT UND METHODE ZU DESSEN BENUTZUNG
SUPPORT POUR BOISSONS ET PROCÉDÉ D'UTILISATION DE CE SUPPORT

(30) Priority: 05.03.2014 PT 10749614
(43) Date of publication of application: 11.01.2017
(73) Proprietor: Novadelta-Comércio e Industria de Cafés, Lda., 1950-041 Lisboa (PT)
(72) Inventor: NABEIRO, Rui Miguel, P-7370-112 Campo Maior (PT)
(74) Representative: Ferreira Pinto, Francisca
(86) International application number: PCT/PT2015/000014
(87) International publication number: WO 2015/133919

(56) References cited:
- EP-A1- 2 570 059
- WO-A1-2012/007313
- WO-A2-2009/016681
- CN-Y- 2 768 619
- GB-A- 2 449 307
- JP-U- S52 120 085

## Description

### Field of the invention

The present invention refers to the field of machines for preparing beverages, for example by means of extraction of at least one aromatic substance, in general, and to supports provided in such type of machines for placing recipients underneath a respective beverage discharge, in particular.

The present invention further refers to a method for use of a support for recipients together with recipients of different dimensions.

### Background of the invention

The prior art includes several solutions of machines for distribution or preparation of beverages that present mobile recipients supports so as to enable a user the possibility of placing recipients of different heights underneath a beverage discharge.

Documents US 5,782,380 and EP 2562130 A1 disclose beverage distribution machines that present in each case supports for recipients of different dimensions that can be moved between a position for less tall recipients to a position for taller recipients, and vice-versa, by means of a rotation of said support around a horizontal axis. Moreover, according to a particular aspect, said support for recipients provides a fluid connection with the interior of a collection container provided underneath thereof, so that any liquid falling upon said recipients support flows through to said collection container. There are other documents in the prior art that disclose similar solutions, such as for example EP 2189087 A1 and EP 2189088 B1.

Document WO 2009/016681 A2 discloses a beverage preparation machine that presents a top support for recipients arranged between a bottom support for recipients provided underneath it and a beverage discharge provided above it and so that it can be rotated around a vertical axis that develops in a rotation support sideways to the body of machine, so as to release space for the placement of a shorter recipient on said support for recipients. Document WO 2012/007313 A1 presents a similar solution and further proposes means for blocking said top support for recipients so as to avoid an unintended rotation of said support for recipients.

Document WO 2011/154492 A1 discloses a similar solution, in this case with rotation around a horizontal axis and again with blocking means. Document WO 2013/104636 A1 further discloses an alternative solution, with the possibility of removal of the support for recipients from a front zone of the machine and removable fixation thereof on a side zone thereof.

Document GB 2449307 A discloses an adjustable cup stand assembly for a beverage preparation machine, whereby said stand can be moved in rotation and moved vertically along a vertical shaft. In particular, said shaft develops in a centered region in respect of a front view of said stand, and in a perimeter region of said stand, not in centered region thereof, when observed in top view.

All these solutions provide rotation around a rotation axis disposed on a side edge of the supports for recipients, conveying fragility to the whole movement because the entire mass rotates externally to said rotation axis

One purpose of the present invention is to provide a support for recipients that provides the use of recipients of different heights in ergonomic manner, with a minimum of interaction needs with the support for recipients, in particular without the need of manual actuation with any parts thereof.

Another purpose of the present invention is to provide a support for recipients presenting a simple and robust construction and a simple and reliable movement mechanism.

### General description of the invention

The objective of the present invention is to provide a machine for preparing beverages, in particular of at least one type of beverage by means of extraction of at least one aromatic substance, such as for example espresso type coffee, tea and similar, eventually based upon processing of respective single-dose packages, and that distinguishes itself in that it present at least one support for recipients that enables the use of recipients of different heights underneath a respective beverage discharge in a simpler and more robust manner in construction terms and in a more intuitive and reliable manner in ergonomic terms.

This objective is attained according to the present by means of a machine for preparing beverages according to claim 1.

In particular, this objective is attained according to the present invention by means of a support for recipients adapted to engage in the body of the machine so that it can rotate horizontally around vertical rotation axis disposed inside and in a substantially centered manner relative to the support for recipients itself, thereby providing free space on the base of placement of the machine for a recipient of bigger dimensions.

A related objective is to provide a support for recipients with a simpler and reliable actuation mechanism, without requiring position-blocking means.

This objective is attained according to the present invention by means of a mobile support for recipients provided with an actuation mechanism that presents two engagement surface developing in a vertical direction along a circular helix from, so that the reposition of an initial position is carried out under the action of the gravity force.

A related objective is to provide a method of use of recipients in machine for preparing beverages without loss of efficacy and simplicity of actuation.

This objective is attained according to the present invention by means of a method according to claim 12.

In particular, it is attained by means of a method whereby a support for recipients is rotated around a vertical axis disposed in a centered manner at least relative to the width of the support for recipients, from an initial position to a position horizontally rotated relative to the former, whereby this rotated position is preferentially maintained by a recipient placed by the user underneath the beverage discharge, and the reposition of the initial position unfolds under the action of the gravity force when said recipient is removed.

### Description of the figures

The present invention shall now be explained in greater detail based upon preferred embodiments thereof and the attached figures.

The Figures show, in simplified schematic representations:
- Figure 1:: front and side views of an embodiment of a machine (1) for preparing beverages according to the invention, presenting a support for recipients (4);
- Figure 2:: top view of the embodiment of machine (1) for preparing beverages represented in Figure 1, representing said support for recipients (4) in a first support position (I) and in a second position (II);
- Figure 3:: detail perspective view of the support for recipients (4) in the machine (1) for preparing beverages represented in Figure 1, when in a second position (II);
- Figure 4:: detail exploded perspective view of the support for recipients (4) represented in Figure 3, showing two support parts (411, 412);
- Figure 5:: detail exploded perspective view of the support for recipients (4) represented in Figure 4, showing the engagement surfaces (411s, 412s) of said two support parts (411, 412).

### Detailed description of a preferred embodiment of the invention

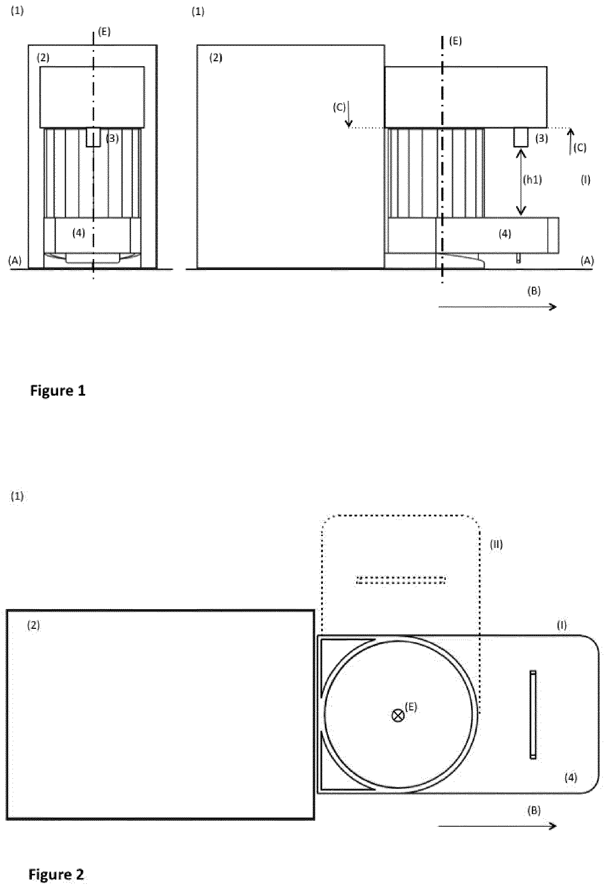

Figure 1 shows front views (on the left side) and side views (on the right side) of a preferred embodiment of a machine (1) for preparing beverages according to the present invention, comprising a body of machine (2), a beverage discharge (3) and a support for recipients (4) adapted so that it provides a surface of placement at least for recipients with a smaller height and a first free height (h1) underneath said beverage discharge (3).

In a particularly preferred embodiment, the body of machine (2) confines several components inside thereof such as for example fluid heating means, fluid displacement means and at least one chamber-like device adapted for interaction of a dose of at least one aromatic substance with a heated and pressurized fluid flow, so that there results a beverage provided to a recipient through a beverage discharge (3). Example of this type of machine (1) for preparing beverages are the machines for preparing espresso type coffee and similar beverages, for example based upon single-doses of the type rigid capsule or flexible pod.

As represented, said machine (1) presents a beverage discharge (3) and a support for recipients (4) provided in removable fixed engagement with the body of machine (2) (not represented in detail). Said support for recipients (4) is provided so that at least part thereof sits in solidary manner with the body of machine (2), that is in a substantially fixed manner upon the base of placement (A) of the machine (1) for preparing beverages. Moreover, in the case of this embodiment, said support for recipients (4) is at a first position (I), developing along the depth direction (B) defined by the body of machine (2) of said machine (1). As represented, when at this first position (I), said support for recipients (4) provides a first free height (h₁) underneath and relative to said beverage discharge (3). In this case it is provided a smaller free height, that is, said first position (I) is appropriate for recipients of smaller height, such as espresso coffee cups or tea cups.

According to a first inventive aspect, said support for recipients (4) is provided so that it can be rotated along a horizontal plane around a vertical rotation axis (E) dispose inside, in particular in a centered manner relative to the front projection of said support for recipients (4), from said first position (I) where it provides a smaller free height underneath said beverage discharge (3) to at least one second position (II) where it provides a bigger free height underneath said beverage discharge (3). It thus results a rotation movement of said support for recipients (4) around itself, or better put, around its central axis, and not around a rotation axis exterior to said support for recipients (4). This configuration advantageously provides greater strength and simplicity of use.

Figure 2 schematically represents the actuation movement whereby at least part of said support for recipients (4) is rotated around said vertical rotation axis (E), from a first position (I) - represented by solid lines - to a second position (II) - represented by dashed lines. In this case, the rotation has been of 90° thereby providing a free space upon the base of placement (A) where a taller recipient, such as for example a glass, can be placed underneath said beverage discharge (3) .

This movement is advantageously carried out with the support for recipients (4) remaining in contact with said base of placement (A), thereby ensuring robust and reliable actuation. Moreover, according to another preferred embodiment, said support for recipients (4) presents a movement mechanism that is actuated by the gravity force, as it shall be explained in greater detail further below, so that it shall not be necessary to apply a force of reposition of said first position (I).

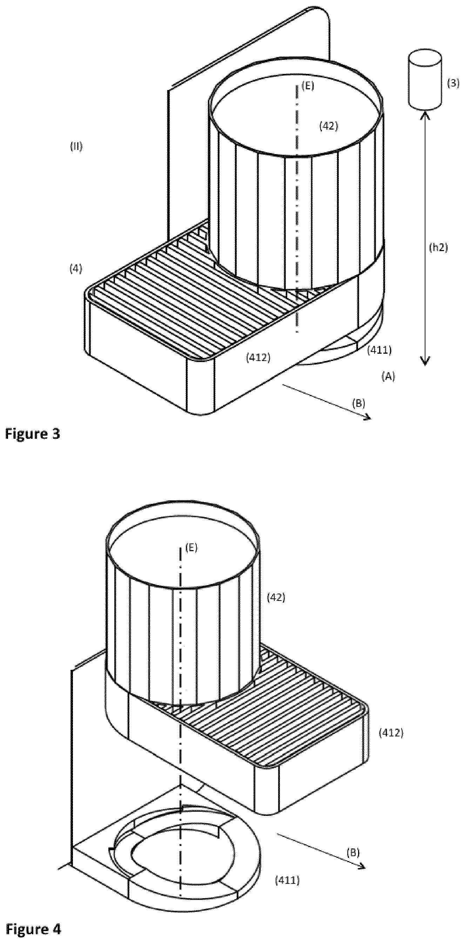

Figure 3 shows the embodiment of the support for recipients (4) according to Figures 1 and 2 in perspective view, as well as the relative position of the beverage discharge (3) in isolated manner, when a second mobile part (412) of the support for recipients (4) has been rotated to a second position (II), thereby releasing a free space with a second free height (h₂), bigger than said first free height (h₁), underneath said beverage discharge (3).

According to a preferred embodiment, the support for recipients (4) presents a movement mechanism adapted so that the reposition of said first position (I) is automatically attained under the action of the gravity force, thereby eliminating the need for means for blocking a position. Alternatively, according to another embodiment, said movement mechanism is provided with a position-retaining element, including of the mechanic or magnetic type, adapted so that it can provide a removable retention of said second position (II).

According to a preferred form of operation, in the case of intending to use a recipient that is taller than said first free height (h₁), a user rotates said second support part (412) sideways between a first support position (I) and a second position (II), then placing said taller recipient upon the of base placement (A) underneath the beverage discharge (3) so as to retain said second support part (412) in said second position (II) .

As also represented, the support for recipients (4) further presents a collection recipient (42) provided with a cylindrical form and adapted for collection of the solid and liquid residues resulting from the beverage preparation process.

According to a preferred embodiment, said second support part (412) adapted for supporting recipients is provided with a grid-like element so as that fluid residues falling thereupon can be collected inside thereof.

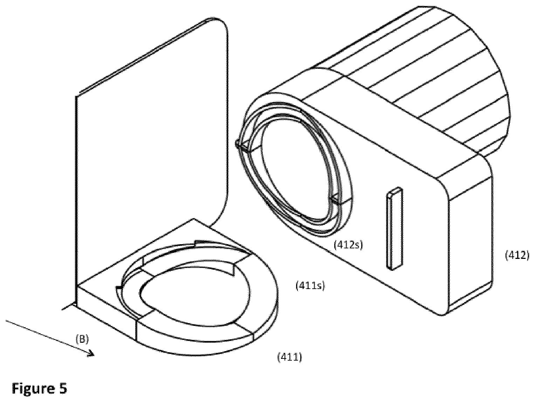

Figures 4 and 5 represent the support for recipients (4) in exploded view so as to illustrate the respective movement mechanism.

As represented, said support for recipients (4) presents a movement mechanism that comprises two engagement parts (411, 412) disposed in vertical alignment and adapted for rotational engagement with each other, whereby a first engagement part (411) is disposed underneath and provided fixed and a second engagement part (412) is disposed on top and provided mobile, in particular so that it can be rotated around said vertical rotation axis (E).

Moreover, as one can see in Figure 5, said engagement parts (411, 412) are provided with respective engagement surfaces (411s, 412s) configured with circular helix form, so that a first engagement part (411) presents an engagement surface (411s) provided so that when actuated can ascend along the engagement surface (412s) of said second engagement part (412).

It thus advantageously results that said engagement parts (411, 412) are provided so that a respective interaction can be actuated by means of an actuation force or by means of the gravity force.

According to another preferred embodiment, the use retains the support for recipients (4) in said second position (II) by means of placing a recipient between the latter and said first position (I), that is in the free space resulting from the rotation of said support for recipients (4), and so as to temporarily block the action of the gravity force. Once said recipient is removed, then the support for recipients (4) automatically recovers said first position (I) under the action of the gravity force.

According to another preferred embodiment, a control device of said machine (1) recognizes the rotation of the support for recipients (4) in a given direction.

According to a preferred embodiment, there is provided a fluid connection between said second support part (412) and residues collection part (42).

According to another preferred embodiment, the collection of fluid residues is provided separately from the solid residues collection.

According to yet another preferred embodiment, the support for recipients (4) is provided so that it can be actuated by means of an actuation force applied manually and/or in motorized manner.

## Claims

1. Machine (1) for preparing beverages presenting a machine body (2) that can be placed upon a base of placement (A), at least one beverage discharge (3) and at least one support for recipients (4) that provides a surface for supporting recipients underneath a respective beverage discharge (3), **characterized in that** said support for recipients (4) is adapted so that part thereof can be rotated along a substantially horizontal plane and around a rotation axis (E) that develops along a vertical direction and is disposed **inside and** in a centred manner relative to said support for recipients (4) **itself,** between a first position (I), where it provides a first free height (h1) underneath a respective beverage discharge (3), and at least a second position (II) **where said support for recipients (4) is** rotated **around** said rotation **axis** relative to said first position and where it provides a second free height (h2) underneath a respective beverage discharge (3),
and **in that** said support for recipients (4) presents a movement mechanism that comprises two engagement parts (411, 412) arranged in vertical alignment and adapted for rotational engagement with each other, whereby a first engagement part (411) is arranged underneath and provided fixed and a second engagement part (412) is arranged on top and provided mobile, so that it can be rotated around said vertical rotation axis (E).

2. Machine (1) for preparing beverages according to claim 1, **characterized in that** said support for recipients (4) is provided so that at least part thereof can be moved by means of rotation around said vertical rotation axis (E) from a first position (I) where it develops along a direction aligned with the depth direction (B) of the machine (1) and provides a more elevated support relative to said base of placement (A) of the machine (1) for preparing beverages, and at least a second position (II) where it provides sufficient free space in said base of placement (A) along said depth direction (B) and underneath the beverage discharge (3) for placing a taller recipient.

3. Machine (1) for preparing beverages according to claims 1 or 2, **characterized in that** said machine body (2) and/or said support for recipients (4) present a movement mechanism adapted so that at least part of said support for recipients (4) can be rotated around said vertical rotation axis (E) between a first position (I) and at least a second position (II), at least in the counterclockwise direction, preferentially also in the clockwise direction.

4. Machine (1) for preparing beverages according to claim 3, **characterized in that** said movement mechanism includes an element of slope adapted so that the reposition of said first position (I) can unfold automatically under the action of the gravity force.

5. Machine (1) for preparing beverages according to claims 3 or 4, **characterized in that** said movement mechanism can be provided with a retention element, including of the mechanic or magnetic type, adapted so that it can provide a removable retention at least at said second position (II).

6. Machine (1) for preparing beverages according to any of claims 3 to 5, **characterized in that** said movement mechanism is adapted so that it requires an actuation force for rotation of at least part of said support for recipients (4) between a first position (I) and at least a second position (II), whereby the retention at said second position (II) is preferentially provided by an object disposed on said base of placement (A) between said part of the support for recipients (4) at said second position (II) and the space underneath the beverage discharge (3).

7. Machine (1) for preparing beverages according to any of previous claims 1 to 6, **characterized in that** said engagement parts (411, 412) are provided with respective engagement surfaces (411s, 412s) configured with a circular section and a helix-like form, so that a first engagement part (411) presents an engagement surface (411s) provided in such a way that when actuated it can ascend along the engagement surface (412s) of said second engagement part (412).

8. Machine (1) for preparing beverages according to any of claims 1 to 7, **characterized in that** said engagement parts (411, 412) are provided so that a respective interaction can be actuated by means of an actuation force or by means of the gravity force.

9. Machine (1) for preparing beverages according to any of claims 1 to 8, **characterized in that** at least the part of the support for recipients (4) adapted for providing a support surface presents a grid-like or mesh-like element along at least part of said support surface, de so that fluid residues falling thereupon can be collected inside of at least part of said support for recipients (4).

10. Machine (1) for preparing beverages according to any one of the previous claims, **characterized in that** said support for recipients (4) is provided with a residues collection recipient (42) provided in fixed manner or so as to engage in removable manner with at least part of said support for recipients (4).

11. Machine (1) for preparing beverages according to claim 10, **characterized in that** said residues collection recipient (42) is configured with a cylindrical form, preferentially of circular cross section.

12. Method for using a recipients support in a beverage preparation machine according to any of claims 1 to 11, **characterized in that** it comprises the following steps:
- placing a machine (1) for preparing beverages upon a base of placement (A);
- rotating a support for recipients (4) around a vertical axis (E), from a first position (I) where it develops along the depth direction (B) of the machine (1) to a second position (II) rotated relative to said first position (I);
- placing a recipient in the space left free underneath the beverage discharge (3) as a result from the rotation of said support for recipients (4) ;
- preparing a beverage thereby using the recipient placed underneath said beverage discharge (3).

13. Method according to claim 12, **characterized in that** it further includes the step of removing the recipient so that said support for recipients (4) can rotate back from said second position (II) to said first position (I) .

14. Method according to claims 12 or 13, **characterized in that** a control device of said machine (1) recognizes the rotation of said support for recipients (4) in a given direction.

## Patentansprüche

1. Maschine (1) zu Getränkezubereitung aufweisend ein Maschinengehäuse (2), das auf einem Einbaufundament (A) eingebaut werden kann, mindestens ein Getränkeausfluss (3) und mindestens eine Behälterstütze (4), der eine Oberfläche zu Stützung von Behältern unterhalb eines Getränkeausflusses (3) versorgt **dadurch gekennzeichnet, dass** genannte Behälterstütze (4) so angepasst ist, dass teils davon entlang einer wesentlich waagerechten Ebene und um eine Drehungsachse (E) gedreht werden kann, die sich entlang einer senkrechten Richtung und innen und mittig selbst zu genannte Behälterstütze (4) erstreckt, zwischen einer ersten Position (I), wo sie eine erste freie Höhe (h1) unterhalb eines entsprechenden Getränkeausflusses (3) versorgt, und mindestens einer zweiten Position (II), wo genannte Behälterstütze (4) um genannte Drehungsachse gegenüber genannter ersten Position gedreht ist, und wo sie eine zweite freie Höhe (h2) unterhalb eines entsprechenden Getränkeausflusses (3) versorgt,
und dass genannte Behälterstütze (4) einen Bewegungsmechanismus aufweist, der zwei Kupplungsteile (411, 412) angeordnet in senkrechter Anordnung umfasst und angepasst zum Dreheingriff mit einander, wobei ein erstes Kupplungsteil (411) unterhalb angeordnet und befestigt geliefert ist und ein zweites Kupplungsteil (412) oberhalb angeordnet und mobil versorgt ist, so dass es um die senkrechte Drehungsachse (E) gedreht werden kann.

2. Maschine (1) zur Getränkezubereitung gemäß Anspruch 1 **dadurch gekennzeichnet, dass** genannte Behälterstütze (4) so vorgesehen ist, dass mindestens teils davon mittels Drehung um genannte senkrechte Drehungsachse (E) von einer ersten Position (I) bewegt werden kann, wo sie sich entlang einer Richtung angeordnet mit der Tiefrichtung (B) von der Maschine (1) erstreckt und eine erhöhtere Stütze gegenüber genanntem Einbaufundament (A) der Maschine (1) zu Getränkezubereitung versorgt, und mindestens eine zweite Position (II), wo sie genug freien Raum in genanntem Einbaufundament (A) entlang genannter Tiefrichtung (B) und unterhalb des Flüssigkeitsausflusses (3) versorgt, um einen größeren Behälter zu ordnen.

3. Maschine (1) zu Getränkezubereitung gemäß Ansprüche 1 oder 2 **dadurch gekennzeichnet, dass** genanntes Maschinengehäuse (2) und/oder Behälterstütze (4) einen Bewegungsmechanismus so angepasst aufweisen, dass mindestens teils von genannter Behälterstütze (4) um genannte senkrechte Drehungsachse (E) zwischen einer ersten Position (I) und mindestens einer zweiten Position (II) gedreht werden kann, mindestens in die Richtung gegen den Uhrzeigersinn, vorzugsweise auch in die Richtung im Uhrzeigersinn.

4. Maschine (1) zu Getränkezubereitung gemäß Anspruch 3 **dadurch gekennzeichnet, dass** genannter Bewegungsmechanismus ein Flankenelement einschließt, so angepasst, dass sich die Einlagerung von genannter ersten Position (I) automatisch unter der Einwirkung der Schwerkraft entfalten kann.

5. Maschine (1) zu Getränkezubereitung gemäß Ansprüche 3 oder 4 **dadurch gekennzeichnet, dass** genannter Bewegungsmechanismus mit einem Aufbewahrungselement versorgt werden kann, einschließlich von mechanischem oder magnetischem Typ, so angepasst, um eine bewegliche Aufbewahrung mindestens an genannte zweite Position (II) zu versorgen.

6. Maschine (1) zur Getränkezubereitung gemäß einer der Ansprüche 3 bis 5 **dadurch gekennzeichnet, dass** genannter Bewegungsmechanismus so angepasst ist, um eine Betätigungskraft zur Drehung von mindestens teils von genannter Behälterstütze (4) zwischen einer ersten Position (I) und mindestens einer zweiten Position (II) zu erfordern, wobei die Aufbewahrung an genannter zweiten Position (II) vorzugsweise von einem Gegenstand versorgt ist, das auf genanntem Einbaufundament (A) zwischen genannter Behälterstütze (4) an genannter zweiten Position (II) und dem Raum unterhalb des Getränkeausflusses (3) angeordnet ist.

7. Maschine (1) zur Getränkezubereitung gemäß einer der vorigen Ansprüche 1 bis 6 **dadurch gekennzeichnet, dass** genannte Kupplungsteile (411, 412) mit entsprechenden Kupplungsoberflächen (411s, 412s) gestaltet mit einem runden Profil und einer spiralen Form so versorgt sind, dass ein erstes Kupplungsteil (411) eine Kupplungsoberfläche (411s) aufweist, so versorgt, dass, wenn betätigt, es entlang der Kupplungsoberfläche (412s) von genanntem zweiten Kupplungsteil (412) hinaufsteigen kann.

8. Maschine (1) zur Getränkezubereitung gemäß einer der Ansprüche 1 bis 7 **dadurch gekennzeichnet, dass** genannte Kupplungsteile (411, 412) so versorgt sind, dass eine entsprechende Interaktion mittels einer Betätigungskraft oder Schwerkraft betätigt werden kann.

9. Maschine (1) zur Getränkezubereitung gemäß einer der Ansprüche 1 bis 8 **dadurch gekennzeichnet, dass** mindestens teils der Behälterstütze (4) angepasst zur Versorgung einer Stützenoberfläche ein gitterartiges oder netzartiges Element entlang mindestens teils von genannter Stützenoberfläche aufweist, so dass Flüssigkeitsrückstände davon fallend innerhalb mindestens teils von genannter Behälterstütze (4) eingesammelt werden können.

10. Maschine (1) zur Getränkezubereitung gemäß einer der Ansprüche **dadurch gekennzeichnet, dass** genannte Behälterstütze (4) mit einem Rückständesammelbehälter (42) vorhanden befestigt oder so versorgt ist, um in beweglicher Art mit mindestens teils von genannter Behälterstütze (4) zu kuppeln.

11. Maschine (10) zur Getränkezubereitung gemäß Anspruch 10 **dadurch gekennzeichnet, dass** genanntes Rückständesammelbehälter (42) mit einer zylindrischen Form, vorzugsweise einem runden Querschnitt gestaltet ist.

12. Verfahren zur Anwendung einer Behälterstütze in einer Getränkezubereitungsmaschine gemäß einer der Ansprüche 1 bis 11 **dadurch gekennzeichnet, dass** es folgende Schritte umfasst:
- Stellen einer Maschine (1) zur Getränkezubereitung auf einem Einbaufundament (A);
- Drehen einer Behälterstütze (4) um eine senkrechte Achse (E), von einer ersten Position (I), wo sie sich entlang einer Tiefrichtung (B) von der Maschine (1) zu einer zweiten Position (II) gedreht gegenüber genannter ersten Position (I) erstreckt;
- Stellen eines Behälters im freigelassenen Raum unterhalb des Getränkeausflusses (3) als Ergebnis der Drehung von genannter Behälterstütze (4);
- Zubereitung eines Getränkes mittels Anwendung des Behälters unterhalb genanntem Getränkeausfluss (3).

13. Verfahren gemäß Anspruch 12 **dadurch gekennzeichnet, dass** es weiterhin den Schritt der Entfernung des Behälters so einschließt, dass genannte Behälterstütze (4) zurück von genannter zweiten Position (II) zu genannter ersten Position (I) drehen kann.

14. Verfahren gemäß Ansprüche 12 oder 13 **dadurch gekennzeichnet, dass** ein Kontrollgerät von genannter Maschine (1) die Drehung von genannter Behälterstütze (4) in einer angegebenen Richtung erkennt.

## Revendications

1. Machine (1) pour la préparation de breuvages, présentant un corps de machine (2) qui peut être placé sur la base de placement (A), au moins une décharge de breuvage (3) et au moins un support à récipients (4) fournissant une surface pour supporter les récipients en dessous d'une décharge de breuvage respectif (3), **caractérisé par le fait que** ledit support à récipients (4) est adapté afin que cette partie de celui-ci puisse être tournée le long d'un plan substantiellement horizontal et autour d'un axe de rotation (E) qui se développe le long d'une direction verticale et qui est disposé **à l'intérieur** et d'une manière centrée relativement au dit support à récipients (4) **en soi,** entre une première position (I), où il fournit une première hauteur libre (h1) en dessous de la respective décharge de breuvage (3) et au moins une seconde position (II) **où ledit support à récipients (4)** tourne **autours** dudit **axe** de rotation relativement à ladite première position et où il fournit une seconde hauteur libre (h2) en dessous de la respective décharge de breuvage (3),
et **par le fait que** ledit support à récipients (4) présente un mécanisme de mouvement qui comprend deux parties d'engagement (411, 412) arrangées dans un alignement vertical et adapté à un engagement rotatif entre eux, où une première partie d'engagement (411) est arrangée en dessous et fournie fixée et une seconde partie d'engagement (412) est arrangée au dessus et fournie mobile, afin qu'elle puisse être tournée autour dudit axe de rotation vertical (E) .

2. Machine (1) pour la préparation de breuvages selon la revendication 1, **caractérisé par le fait que** ledit support à récipients (4) est fourni afin qu'au moins une partie puisse être déplacée par des moyens de rotation autour d'un axe de rotation verticale (E) depuis une première position (I) où il se développe le long d'une direction alignée avec la direction de la profondeur (B) de la machine (1) et fournit un support plus élevé relativement à ladite base de placement (A) de la machine (1) pour la préparation de breuvages et au moins une seconde position (II) où il fournit suffisamment d'espace libre dans ladite base de placement (A) le long de ladite direction de profondeur (B) et en dessous de la décharge de breuvage (3) pour le placement d'un récipient plus grand.

3. Machine (1) pour la préparation de breuvages selon les revendications 1 ou 2, **caractérisée par le fait que** ledit corps de la machine (2) et/ou ledit support à récipients (4) présentent un mécanisme de mouvement adapté afin qu'au moins une partie dudit support à récipients (4) puisse être tournée autour dudit axe de rotation vertical (E) entre la première position (I) et au moins une seconde position (II), au moins dans le sens contraire des aiguilles d'une montre, de préférence également dans le sens des aiguilles d'une montre.

4. Machine (1) pour la préparation de breuvages selon la revendication 3, **caractérisée par le fait que** le mécanisme de mouvement inclut un élément de pente adapté afin que le repositionnement de ladite première position (I) puisse de dérouler automatiquement sous l'action de la force de gravité.

5. Machine (1) pour la préparation de breuvages selon les revendications 3 ou 4, **caractérisée par le fait que** ledit mécanisme de mouvement puisse être fourni avec un élément de rétention, y compris de type mécanique et magnétique, adapté afin qu'il puisse fournir une rétention amovible au moins sur ladite seconde position (II).

6. Machine (1) pour la préparation de breuvages selon une quelconque revendication entre 3 et 5 **caractérisée par le fait que** ledit mécanisme de mouvement est adapté afin qu'il requiert une force d'actionnement pour la rotation d'au moins une partie dudit support à récipients (4) entre la première position (I) et au moins une seconde position (II), où la rétention sur ladite seconde position (II) est de préférence fournie par un objet disposé sur ladite base de placement (A) entre ladite partie du support à récipients (4) sur ladite seconde position (II) et l'espace en dessous de la décharge de breuvage (3).

7. Machine (1) de préparation de breuvages selon une quelconque revendication précédente entre 1 et 6, **caractérisée par le fait que** lesdites parties d'engagement (411, 412) sont fournies avec des surfaces d'engagement respectives (411s, 412s) configurées avec une section circulaire et une forme de type hélice, afin qu'une première partie d'engagement (411) présente une surface d'engagement (411s) fournie de telle forme que lorsqu'elle est actionnée, elle puisse s'élever le long de la surface d'engagement (412s) de ladite seconde partie d'engagement (412).

8. Machine (1) de préparation de breuvages selon une quelconque revendication entre 1 et 7, **caractérisée par le fait que** lesdites parties d'engagement (411, 412) sont fournies afin qu'une interaction respective puisse être actionnée au moyen d'une force d'actionnement ou au moyen de la force de la gravité.

9. Machine (1) de préparation de breuvages selon une quelconque revendication entre 1 et 8, **caractérisée par le fait qu'**au moins la partie du support à récipients (4) adaptée en vue de fournir une surface de support, présente un élément de type grille ou de type maillage le long d'au moins une partie de ladite surface de support, afin que les résidus de fluide tombant alors, puissent être collectés à l'intérieur d'au moins une partie dudit support à récipients (4).

10. Machine (1) de préparation de breuvages selon une quelconque revendication précédente, **caractérisée par le fait que** ledit support à récipients (4) est fourni avec un récipient de collecte de résidus (42), fourni fixé de manière à ou pour engager de manière amovible avec au moins une partie dudit support à récipients (4).

11. Machine (1) de préparation de breuvages selon la revendication 10, **caractérisée par le fait que** le récipient de collecte de résidus (42) est configuré sous une forme cylindrique, de préférence comme une section en croix circulaire.

12. Méthode d'utilisation de support de récipients dans une machine de préparation de breuvage selon une quelconque revendication entre 1 et 11, **caractérisée par le fait qu'**elle comprend les étapes suivantes:
- Placement d'une machine (1) pour la préparation de breuvages sur une base de placement (A);
- Rotation d'un support à récipients (4) autour d'un axe vertical (E), depuis une première position (I) où il se développe le long de la direction de la profondeur (B) de la machine (1) vers une seconde position (II) tournée relativement à ladite première position (I);
- Placement d'un récipient dans l'espace laissé libre en dessous de la décharge de breuvage (3) comme résultat de la rotation dudit support à récipients (4);
- Préparation d'un breuvage en utilisant donc le récipient placé en dessous de ladite décharge de breuvage (3).

13. Méthode selon la revendication 12, **caractérisée par le fait qu'**elle inclut aussi l'étape de retrait du récipient afin que ledit support à récipients (4) puisse tourner depuis ladite seconde position (II) vers ladite première position (I) .

14. Méthode selon les revendications 12 ou 13, **caractérisée par le fait qu'**un dispositif de contrôle de ladite machine (1) reconnaît la rotation dudit support à récipients (4) dans une direction donnée.
